# EUROPEAN PATENT SPECIFICATION

(11) **EP 2 442 672 B1**
(45) Date of publication and mention of the grant of the patent: **13.07.2016**
(21) Application number: 10724397.4
(22) Date of filing: 28.05.2010
(51) Int. Cl.: A23L 27/10, A23L 19/00

(54) **PROCESS FOR PREPARING A FOOD PRODUCT**
VERFAHREN ZUR HERSTELLUNG EINES NAHRUNGSMITTELPRODUKTS
PROCÉDÉ POUR LA PRÉPARATION D'UN PRODUIT ALIMENTAIRE

(30) Priority: 18.06.2009 EP 09163097
(43) Date of publication of application: 25.04.2012
(73) Proprietor: Unilever N.V., 3013 AL Rotterdam (NL); Unilever PLC, A Company Registered in England and Wales under Company no. 41424, London, Greater London EC4Y 0DY (GB)
(72) Inventor: DUBBELMAN, Sander, NL-3133 AT Vlaardingen (NL); MAVROUDIS, Nikolaos, Newcastle-upon-Tyne, NE1 8ST (GB)
(74) Representative: Tjon, Hon Kong Guno
(86) International application number: PCT/EP2010/057436
(87) International publication number: WO 2010/145930

(56) References cited:
- WO-A-99/60868
- WO-A-2008/040611
- WO-A-2009/080763
- GB-A- 1 312 248
- JP-A- 2003 135 038
- US-A1- 2003 026 884

## Description

This invention relates to the field of food products, in particular to the field of acidified food products and processes to prepare such food products. More particularly, the present invention provides a process for the production of a concentrated natural acid extract from tomato serum and concentrated natural acid extract so obtained.

WO 2009/080763, which was published after the priority date of the present application, describes a method for producing an umami active tomato fraction, said method comprising the steps of
a) providing a tomato serum, preferably substantially free from sucrose;
b) separating the serum into two or more portions: at least one first portion and at least one second portion whereby the at least one first portion is lower in lycopene than the at least one second portion;
c) concentrating the at least one first portion low in lycopene;
d) fractionating at least one first portion obtained in step c) into at least one first primary fraction and at least one second primary fraction whereby the w/w ratio of citric acid to glutamic acid of the at least one first primary fraction is higher than the at least one second primary fraction;
e) optionally, concentrating a primary fraction to be used as the feed for a second fractionation step;
f) subjecting a primary fraction to a second fractionation step to prepare at least one first secondary fraction and at least one second secondary fraction whereby the w/w ratio of citric acid to glutamic acid (C/Glu) of the at least one second secondary fraction is lower than the at least one first secondary fraction.
The examples of WO 2009/080763 describe umami active tomato fractions containing appreciable levels of tomato sugars and glutamic acid, and small amounts of citric acid.

WO 2008/040611 describes a method of producing a fractionated tomato extract having a pH of at least 4.6, when having a Brix value of 1.0; comprising 2.5-95 wt% of glutamic acid, based on the dry weight thereof; having a weight ratio of total glutamic acid to citric acid of at least 0.8 and a lycopene level of below 50 ppm, based on the dry weight of the extract, said process comprising the subsequent steps of comprising the steps of preparing tomato serum and hydrolysing the proteins contained in the tomatoes from which the serum is prepared; subsequently fractionating the serum into two or more fractions, one fraction being rich in glutamic acid and low in citric acid and lycopene. The tomato extracts disclosed in WO 2008/040611 combine high levels of sugars with substantially lower levels of citric acid.

JP 2003/135,038 describes a method for producing a transparent tomato beverage, said process comprising the step of centrifuging a diluted tomato paste; ultrafiltering the supernatant; concentrating the permeate so obtained; and contacting the concentrated permeate with activated carbon.

Many food products prepared on an industrial scale are acidified by addition of citric acid. For example, citric acid is added to concentrated bouillon cubes to balance the impact of the relatively high amounts of .mono sodium glutamate.

Citric acid is typically manufactured using certain strains of *Aspergillus niger* to ferment a solution of sucrose and salt. In the deep tank submerged process, *Aspergillus niger* mould spores are grown under controlled aseptic condition on a test-tube slant and transferred to a seed tank or inoculum which is added to a fermentor along with pasteurised syrup. The pH is adjusted and nutrients are added. Sterile air is sparged into the fermentor while the sugar is converted to citric acid. The complete fermentation cycle can take as long as 15 day. The citric acid is usually purified using a lime-sulfuric acid method or a liquid extraction process. The fermentation broth, which has been separated from the insoluble biomass is treated with a calcium hydroxide (lime) slurry to precipitate calcium citrate. After sufficient reaction time, the calcium citrate slurry is filtered and the filter cake washed free of soluble impurities. The clean calcium citrate cake is reslurried and acidified with sulphuric acid, converting the calcium citrate to soluble citric acid and insoluble calcium sulphate. Both the calcium citrate and calcium sulphate reactions are generally performed in agitated reaction vessels made of 316 stainless steel and filtered on commercially available filtration equipment. The citric acid solution may be deionized and concentrated in a series of crystallisation steps to achieve the physical separation of citric acid from the remaining impurities.

Alternatively, citric acid may be extracted from the fermentation broth using a mixture of tri-laurylamine, n-octanol, and C10 or C11 hydrocarbon, followed by re-extraction of citric acid from the solvent phase into water. The final processing steps are a wash of the aqueous citric acid solution by the hydrocarbon solvent, followed by passage of the acid solution through granular activated carbon columns.

The current production of citric acid thus applies large amount of harsh chemicals such as concentrated acids like sulphuric acid, and bases like NaOH or lime. This is undesirable as food processing industries are trying to decrease the environmental impact of their processes by avoiding such harsh chemicals. Moreover, consumers who increasingly demand natural food ingredients, do not perceive such processes as natural. Health conscious consumers prefer not only natural food ingredients but also ingredients they associate with health benefits

Thus, there is need for a more natural source of citric acid suitable for a variety of food products like concentrated bouillon products without adding undesirable flavours. One alternative is the application of lemon juice. However, the distinct lemon flavour makes this suitable for limited applications only. Therefore, the food industry is still looking for alternative sources of citric acid which do not have the drawbacks mentioned above and would appeal to the health conscious customer.

### Summary of the invention

Surprisingly, we have now found a process to acidify a food product comprising the steps of
a. providing a food product to be acidified
b. adding a concentrated natural tomato-acid extract as described herein to said food product.

Another embodiment of the invention provides the process of claim 1.

The present invention thus provides food manufacturers a novel and more natural way of acidifying a food product without the drawbacks mentioned above. Unexpectedly, the profile of the natural tomato acid extract has the advantage that it may increase the health perception of a wide variety of food products due to the presence of certain tomato compounds like potassium and phenolic compounds. While potassium is perceived as positive with regard to maintaining a healthy blood pressure, phenolic compounds are known as potent anti-oxidants. According to yet another embodiment of the invention a concentrated natural tomato-acid extract for use in food products is provided. Yet another embodiment of the invention provides a concentrated natural tomato-acid extract substantially free from lycopene. Still another embodiment provides a natural tomato-acid extract (preferably obtainable according to the process described herein) whereby the concentrated natural tomato-acid extract comprises a w/w ratio of citric acid to tomato sugars of at least 1:10 comprising at least 5 wt% citric acid by weight of the total concentrated natural tomato-acid extract (dry basis) Other embodiments and details are described below.

### Detailed description of the invention

The term tomato sugar(s) will be used to describe the combined amount of tomato glucose and fructose. Preferably these are measured as described in the examples.

The term "tomato fraction" will be used to describe a fraction obtained after a fractionation step using a tomato extract as a feed.

The term "tomato extract" will be used to denote a composition extracted from tomatoes such as tomato serum.

The term "primary tomato fraction" will be used to describe a tomato fraction obtained after one fractionation step.

The term "secondary tomato fraction" will be used to describe a tomato fraction obtained after fractionating a primary tomato fraction.

The term "tomato fraction" will be used to refer to a primary or a secondary tomato fraction or both.

When the term "first" and "second" is used to distinguish e.g. a first primary fraction from a second primary fraction, these terms are meant to distinguish these primary fractions from each other and not meant to describe the order of elution of these fractions. The description of at least one first and least one second fraction includes the possibility of at least one further fraction.

Although, the tomato fraction and the concentrated tomato acid extract will not have a characteristic tomato smell it usually will comprise phenolic compounds and potassium characteristic for tomato that survive the process to obtain said tomato fraction or concentrated tomato acid extract such as the fractionation step. A tomato fraction or concentrated tomato-acid extract will usually have trace amounts of non-hydrolysed tomato phenolic compounds and potassium. Preferably a concentrated tomato acid extract will have at least 0.01 ppm of the combined amount of one or more of the non-hydrolysed tomato phenolic compounds selected from cholorogenic acid, ferulic acid, cafeic acid, p-coumaric acid, rutin, quercetin, naringenin by weight of the concentrated extract (on dry basis). Preferably a concentrated natural tomato-acid extract comprises at least 500 ppm or preferably at least 1000 ppm of potassium by dry weight of the concentrated natural tomato-acid extract (dry basis). It is understood that when a combined amount is described it does not mean that all components need to be present. For example, in the case of a "combined amount of non-hydrolysed phenolic compounds" e.g. in some cases some phenolic compounds may be absent.

The term "Brix value" which is considered to be synonymous to the term Degrees Brix (symbol °Bx) is a measurement of the amount of dry matter. It is a measure of the percent total soluble solids in a given weight of plant juice, which includes the summation of sucrose glucose, fructose, vitamins, amino acids, protein, hormones and any other soluble solids. It is often expressed as the percentage of sucrose. It is measured with a saccharimeter that measures specific gravity of a liquid or more easily with a refractometer or a Brix hydrometer.

It will be appreciated by the skilled person that glutamic acid and glutamate refer to the protonated acid and the deprotonated solubilised form of the same acid respectively. In addition, glutamate is commonly used to refer to salts of the free acid. For the sake of convenience the term glutamic acid is used herein to refer to both the free protonated acid and the deprotonated form either in solution or as a salt, unless indicated otherwise. Thus, to calculate the amount of glutamic acid in the tomato extract, all glutamate therein is assumed be in the form of glutamic acid.

The term "comprising" whenever used in this document is intended to indicate the presence of stated features, integers, steps, components, but not to preclude the presence or addition of one or more other features, integers, steps, components or groups thereof.

### Process to prepare a concentrated natural tomato-acid extract

When trying to develop a process to prepare the inventive concentrated natural tomato-acid extract, applicants found that existing processes typically use harsh chemicals as NaOH, KOH, Ca(OH)₂, sulphuric acid, HCl. Therefore, it was an object of the invention to provide a process which avoids the use of these harsh chemicals which are typically seen as unnatural by the average consumer. Surprisingly, applicants have found that this object is met by the following aspect of the invention which provides a process for producing a concentrated natural tomato-acid extract as described supra comprising the steps of:
a. providing a tomato serum, preferably substantially free from sucrose;
b. separating the serum into two or more portions: at least one first portion and at least one second portion whereby the at least one first portion is lower in lycopene than the at least one second portion;
c. concentrating the at least one first portion low in lycopene, preferably to a Brix value of at least 10 degrees Brix;
d. fractionating the at least one first portion low in lycopene into at least one first primary fraction and at least one second primary fraction whereby the w/w ratio of citric acid to tomato sugars (C/S) of the at least one first primary fraction is lower than the at least one second primary fraction, and the at least one first primary fraction has a w/w ratio of citric acid to tomato sugars (C/S) of at least 1 : 10, preferably at least 1: 5, more preferably at least 1: 3, most preferably at least 1 : 1 and preferably at most 1:0, preferably at most 1000:1, more preferably at most 100 : 1, whereby tomato sugars is the combined amount of glucose and fructose;
e. optionally, concentrating a primary fraction to be used as the feed for a second fractionation step;
f. optionally, subjecting a primary fraction to a second fractionation step to prepare at least one first secondary fraction and at least one second secondary fraction whereby the w/w ratio of citric acid to tomato sugars of the at least one first secondary fraction is higher than the at least one second secondary fraction;
g. concentrating the at least one first primary fraction and/or first secondary fraction to provide a concentrated natural tomato-acid extract, said concentrated natural tomato-acid extract having at least 5 wt%, preferably at least 10 wt% more preferably at least 20 wt% and preferably at most 90 wt%, preferably at most 85 wt%, more preferably at most 80 wt% of citric acid by weight of the concentrated natural tomato-acid extract based on dry matter.

Prior to providing the serum, tomatoes are typically collected, washed, sorted and selected in accordance with the usual practice in tomato processing. These steps are not an essential aspect of the invention and any feasible type of operation may be applied with regard to pre-treatment without departing from the scope of the invention.

Typically, the step of providing a tomato serum comprises a stage of comminuting and/or macerating tomatoes, which in accordance with the invention, is meant to encompass any type of process that can be employed to disintegrate or break the tomatoes, typically, in order to obtain a pumpable mass. Typically the comminuting or macerating is continued until the particle size in the pumpable mass is reduced to certain predetermined dimensions. In order to achieve this, any type of operation and/or apparatus known to or conceivable for the skilled person may be used in accordance with the invention. According to a preferred embodiment a chopper pump is employed, wherein the tomatoes are pressed through square holes, typically 1-2 cm in diameter. In a particularly preferred embodiment, the step of providing the serum comprises the stage of applying heat prior to, during or after the comminuting and or macerating of the tomatoes. If the amount of heat applied is such that the tomatoes reach a temperature of above 80°C, the process is generally referred to as hot break. Hot break has the advantage that enzymes, e.g. pectin-degrading enzymes, are inactivated quickly.

After having obtained a pumpable mass, in a separation step said pumpable mass is separated into serum - an aqueous liquid comprising soluble tomato solids - and pulp, a (wet) solid mass containing mainly insoluble tomato components such as the skin and seeds. In accordance with a preferred embodiment of the invention seeds and skin may be removed from the pumpable mass, typically by sieving using perforated screens or the like in accordance with common tomato processing, prior to said separation. Separation of the pumpable mass into serum and pulp can be effected by any means known in the art, in particular using a decanter or a centrifugal separator. In a particularly preferred embodiment of the invention a centrifugal separator is employed, such as a Westfalia CA-365-010 at a revolution speed of 4000 rpm and/or an Alfa Laval Centrifuge. In the context of the invention the pulp obtained is considered to constitute a waste material, but it may be used in accordance with conventional tomato processing, for a variety of purposes known by the skilled person. Performing the separation in two or even more steps may be preferred. However, as will be clear to the skilled person, separation in one single step, though less convenient, may be found just as suitable and may be applied without departing from the scope of the invention.

Optionally, the obtained serum may be clarified by micro filtration, so as to assure that said serum is free of any undissolved solids remaining, which may typically present problems during further process steps. Typically the additional micro filtration step comprises forcing the serum through a microfilter having a pore size within the range of 0.2-100 micron, preferably within the range of 2-50 micron, most preferably within the range of 3-30 micron (endpoints included in the range).

In a further step, the obtained serum, if desired after the micro-filtration step described supra, is separated into two or more portions: at least one first portion and at least one second portion whereby the at least one first portion is lower in lycopene than the at least one second portion.

The serum used as starting material for this separation step is preferably undiluted or even more preferably concentrated. Concentration may be carried out until a specific predefined Brix level has been reached. For example, the solution may be concentrated by removing at least part of the water content e.g. under reduced pressure and/or increased temperature, such as to increase the rate of water evaporation. As will be understood by the skilled person, applying reduced pressure can suitably reduce thermal damage to the product as lower temperatures can be used, thus improving the quality of the obtained product. Preferably the concentration is performed using a falling film evaporator, spinning column evaporator or plate evaporator, although entirely different systems are available and can be used without departing from the scope of the invention. Surprisingly, applicants have found that concentrating the solution used as the feed for the separation step or a fractionation step was especially advantageous by rendering the process more robust and cost effective. Thus, the feed for the separation process or fractionation process is preferably concentrated until having a Brix value of at least 10, preferably at least 12, more preferably at least 20, more preferably at least 30 and preferably at most 80, more preferably at most 60, even more preferably at most 50.

The tomato serum used is preferably substantially free from sucrose. For this purpose the term substantially free from sucrose is meant to describe a level of less than 5 wt%, more preferably less than 3 wt%, most preferably less than 2 wt% of sucrose by weight of the tomato serum based on dry matter.

The separation step preferably comprises ultra-filtrating the serum through a membrane with a molecular weight cut off of 250 kDa, more preferably 200 kDa, even more preferably 100 kDa, most preferably 50 kDa. For the ultra filtration any suitable membrane may be used known to the skilled person in the art for this purpose. Typically, ultra filtration membranes are meant to describe membranes which can remove particles of 0.001 - 0.02 micron. A suitable membrane is an Alfa-Laval polysulphone membrane with 100kDa molecular weight cut-off (GR40PP). If ultra filtration is used, the at least one second portion is preferably the retentate of the ultra filtration step having a level of lycopene higher than the at least one first portion, the latter being the permeate. The at least one first portion of that separation step, e.g. the ultra filtration permeate and in fact, all tomato fractions according to the invention preferably contain at most 1000ppm, preferably at most 500ppm, preferably at most 300 pm, preferably at most 150 ppm, preferably at most 50 ppm, preferably at least 0 ppm, preferably 0 ppm of lycopene. Ppm measurements of the tomato fractions are usually based on the wet weight thereof as it is measured in permeate which needs to be liquid for the next step of the process.

In a preferred subsequent step, the at least one first portion obtained after the first separation step may then be concentrated as described above.

The at least one first portion obtained from the separation step, in case of ultra filtration the ultra filtration permeate, preferably after having been concentrated to e.g. 40 Brix, is then used as a feed for a chromatographic fractionation. This fractionation step is preferably carried out by passing the feed through the chromatographic separation medium and eluting the feed components from the medium with a suitable eluent, thereby achieving fractionation of the feed into at least one first primary fraction and at least one second primary fraction.

Any suitable method may be used for the fractionation step, preferably whereby the citric acid is able to elute together with at least one of the tomato compounds such as potassium and at least one of the phenolic compounds mentioned above. Fractionation is preferably achieved by using ion exclusion chromatography whereby the chromatographic separation medium is an ion exclusion resin. Another fractionation technique includes electrodialysis.

Applicants have found that the fractionation is more robust and cost-effective when it is carried out at elevated temperatures. Fractionation, e.g. when ion exclusion chromatography is used, is preferably carried out at a temperature of at least 40 degrees C, preferably at least 50 degrees C, more preferably at least 60 degrees C, preferably at most 105 degrees C, preferably at most 95 degrees C, more preferably at most 85 degrees C, most preferably at most 75 degrees C.

The at least one first portion obtained from the separation step used as a feed for the first fractionation step preferably comprises of more than 0.5 g/L of potassium, preferably more than 1 g/L of potassium, more preferably more than 5 g/L of potassium by weight of said first portion.

Any appropriate solution may be used as eluent but demineralised water is preferred. More preferred is water purified by for example reverse osmosis (e.g. MilliQ). Another preferred eluent includes demineralised water comprising at most 10 wt% (w/w), preferably at most 5 wt% or more preferably at most 2 wt%, more preferably at most 0.05 wt% or more preferably at most 0.01 wt% of particle free tomato serum. Preferably, the eluent comprises demineralised water and at least 0.001 wt of particle free tomato serum. Particle free tomato serum is usually meant to describe tomato serum comprising less than 5 ppm of particles of at least 0.2 microns, more preferably less than 3 ppm of particles of at least 0.2 microns, even more preferably less than 1 ppm of particles of at least 0.2 microns, most preferably no particles of at least 0.2 microns. In terms of particle size distribution, particle free tomato serum (or particle free eluent for that matters) is usually meant to describe tomato serum or eluent comprising at most 40 vol%, preferably at most 30 vol%, more preferably at most 20 vol% and preferably at least 0 vol% of particles of larger than 2 micron. Particle free tomato serum may be prepared using any suitable means known to the skilled person such as micro filtration, high speed centrifugation or ultra filtration.

Suitable ion exclusion resins include DIAION™ UBK-530, UBK-535, UBK-550, and UBK-555 (each of which is produced by Mitsubishi Chemical Corporation). Preferred resins are negatively charged (and thereby capable of strong repulsion of negatively charged compounds). Especially preferred is UBK-530, a strong acid cation resin containing, as a base material, polystyrene-divinyl benzene gel (produced by MITSUBISHI CHEMICAL CORP.; K+-type; average particle size: 200 to 240 µm; exchange capacity: 1.6 meq/ml). The eluting solution is preferably demineralised water.

Another fractionation technique, especially for the first fractionation step, includes electrodialysis. Electrodialysis is an electro-membrane process where transport of ions takes place through ion exchange membranes from one solution to another under the influence of an electric potential. Ion-exchange membranes resemble highly swollen ion-exchange resins in a sheet format. In conventional electrodialysis two different kinds on ion-exchange membranes are used:
- Cation exchange membranes which contain negatively charged groups fixed to the polymer matrix
- Anion exchange membrane which contain positively charged groups fixed to the polymer matrix

Mobile ions in solution that have the same charge as the fixed groups in the membrane are referred as co-ions and mobile ions that have the opposite charge as the fixed groups in the membrane are referred as counter ions. In electrodialysis it is assumed that the total current through the membrane is transported by ions only. Under the influence of an electric field the mobile ions in solution travel to the respective electrodes. Co-ions are rejected by membranes and counter ions pass through the membranes. Generally guided by the teaching of this application, a skilled person will be able to choose the conditions and membranes for electro dialysis to obtain the inventive tomato fraction. More specifically, the membranes should preferably be permeable for negatively charged organic molecules having the molecular weight of 250, more preferably 225, more preferably 200. Most preferably, the membrane should be permeable for citric acid (192).

The primary fractions resulting from a first fractionation step may vary in composition depending on when they are collected. Preferably, first fractionation step comprises fractionating the concentrated at least one first portion relatively low in lycopene into at least one first primary fraction and at least one second primary fraction whereby one or more of the following w/w ratio's of the at least one first primary fraction is higher than the at least one second primary fraction, said w/w ratio being according one or more of the three weight ratio's mentioned above: citric acid to tomato sugars, citric acid to potassium, citric acid to glutamic acid. Preferably, at least one first primary fraction is collected such that the w/w ratio of citric acid to tomato sugars is at least 1:10. Such a first primary fraction is relatively low in sugar and relatively high is citric acid. As it will be clear to the skilled person in this art it will be possible to minimise the amount of tomato sugars in this fraction to substantially 0 or 0.

Usually at least one first primary fraction is collected such that the said fraction has one or more of the following w/w ratios:
- a w/w ratio of citric acid to tomato sugars (C/S) of at least 1: 5, preferably at least 1: 3, more preferably at least 1 : 1 and preferably at most 1:0, preferably at most 1000:1, more preferably at most 100 : 1, preferably, whereby tomato sugars is the combined amount of glucose and fructose;
- a w/w ratio of citric acid to potassium of at least 1.2 : 1, preferably at least 1.5 : 1, more preferably at least 2 : 1, preferably at most 300:1, more preferably at most 250 : 1, more preferably at most 100 : 1;
- a w/w ratio of citric acid to glutamic acid of at least 1 : 1, preferably at least 2 : 1, more preferably at least 3 : 1, preferably at most 1:0, more preferably at most 1000: 0.01, more preferably at most 1000: 1

For certain applications the level of citric acid and the respective w/w ratio may still be too low in a primary tomato fraction. For example, a w/w ratio may be outside the range given above. Or in some cases even when a w/w ratio is higher than the lowest point in the range described above, it may be desired to increase the w/w ratio even more. In such cases - inter alia - it may be desirable to decrease the amount of undesirable tomato compounds in a primary fraction even more by fractionating the primary fraction in a second fractionation step. Thus an optional step comprises subjecting a primary fraction to a second fractionation step to prepare at least one first secondary fraction and at least one second secondary fraction whereby one or more of the following w/w ratio's of the at least one second secondary fraction is higher than the at least one first secondary fraction, said w/w ratio being one or more of the three weight ratio's mentioned above: citric acid to tomato sugars, citric acid to potassium, citric acid to glutamic acid.

Preferably the at least one first secondary fraction has a w/w ratio citric acid to tomato sugars, citric acid to potassium, citric acid to glutamic acid as described above for the first primary fraction.

The primary fraction used as a feed for the second fractionation step is preferably concentrated as described above. The primary fraction used as a feed for the second fractionation step may be the at least one first or the at least one second primary fraction. The feed for the second fractionation step is preferably the at least one first primary fraction as described before.

For the second fractionation step, ion exclusion chromatography may be used as detailed above for the first fractionation step.

To increase the yield per kg of tomatoes used, the primary and secondary fractions high in citric acid may be combined to from a single tomato fraction high in citric acid. Preferably the first primary fraction and the first secondary fraction are combined to from a single tomato fraction high in citric acid. Either of these fractions, primary, secondary or the combination thereof preferably has a w/w ratio of citric acid to tomato sugars, citric acid to potassium, citric acid to glutamic acid as described above for the at least one first primary fraction.

Any of these tomato fractions may be concentrated as desired to form the concentrated natural tomato-acid extract. The concentrate may be in any form such as liquid or paste. The concentrated natural tomato-acid extract may even be dehydrated such that a dry powder is obtained. In addition, standard pasteurization or any other thermal or non-thermal treatment may be applied to increase the microbiological shelf stability. The concentrate is usually packaged in an appropriate container.

### Process to acidify food products

Tomato products are renowned for their characteristic taste. Surprisingly, applicants have found a concentrated tomato acid extract which can be used to acidify food products like concentrated bouillon products such as bouillon cubes but also other non-tomato food products without adding an off-taste. The concentrated natural tomato-acid extract according to one aspect of the invention is relatively high in citric acid while having very low amounts of other tomato derived compounds that could add an undesirable off-taste. Without wishing to be bound by any theory, it is believed that the inventive tomato concentrated natural tomato-acid extract is characterized by relatively low levels of certain tomato compounds while having relatively high levels of citric acid. This can be expressed as certain w/w ratios of citric acid to these undesirable tomato compounds. Applicants believe that a concentrated natural tomato-acid extract can be advantageously used as a concentrated universal acidifier when said concentrated natural tomato-acid extract has one or more of the following w/w ratios:
- a w/w ratio of citric acid to tomato sugars (C/S) of at least 1 : 10, preferably at least 1: 5, more preferably at least 1: 3, most preferably at least 0.1 : 1 and preferably at most 1:0, preferably at most 1000:1, more preferably at most 100 : 1, preferably, whereby tomato sugars is the combined amount of glucose and fructose;
- a w/w ratio of citric acid to potassium of at least 1.2 : 1, preferably at least 1.5 : 1, more preferably at least 2 : 1, preferably at most 300:1, more preferably at most 250 : 1, more preferably at most 100 : 1;
- a w/w ratio of citric acid to glutamic acid of at least 1 : 1, preferably at least 2 : 1, more preferably at least 3 : 1, preferably at most 1:0, more preferably at most 1000: 0.01, more preferably at most 1000: 1

While in most cases there will be some measurable amount of one or more of these undesirable tomato compounds, depending on the process used the level of these undesirable tomato compounds may be very low such that these w/w ratios are correspondingly high. In the extreme case that no measurable amount of such an undesirable tomato compound is present the tomato fraction has a w/w ratio 1 : 0. Formulated in alternative terms such tomato fraction is characterised by the absence of measurable amounts of the respective undesirable tomato compounds, while having high levels of citric acid. The level of citric acid in the inventive concentrated natural tomato-acid extract will be preferably at least 5 wt%, preferably at least 10 wt% more preferably at least 20 wt% and preferably at most 90 wt%, preferably at most 85 wt%, more preferably at most 80 wt% of citric acid by weight of the concentrated natural tomato-acid extract based on dry matter. Thus, according yet another aspect of the invention a process is provided to acidify a food product comprising the steps of
a. providing a food product to be acidified
b. adding a concentrated natural tomato-acid extract as described above to said food product

In a preferred embodiment, a concentrated natural tomato-acid extract according to the invention is substantially free from lycopene. A tomato fraction substantially free from lycopene may be advantageously used in various food applications unlike tomato fractions with a characteristic colour of lycopene. A concentrated natural tomato-acid extract substantially free from lycopene is meant to describe that the concentrated natural tomato-acid extract comprises at most 1000ppm, preferably at most 500ppm, preferably at most 300 pm, preferably at most 150 ppm, preferably at most 50 ppm, preferably at least 0 ppm, preferably 0 ppm of lycopene (dry basis).

The tomato fraction according to the invention may be advantageously used in a wide spectrum of food products including non tomato food products such as concentrated bouillon products, ketchup, beverages, soups, sauces and meal kits, . The amount of the inventive tomato fraction to be used in a food product to be acidified is the sufficient amount to obtain the desired effect. According to another aspect of the invention acidified food product is provided comprising a sufficient amount of an inventive concentrated natural tomato-acid extract, preferably a sufficient amount of the inventive concentrated natural tomato-acid extract is such that the amount of citric acid in the acidified food product is at least 0.001 wt%, preferably at least 0.01 wt%, preferably at least 0.05 wt%, preferably at most 10 wt%, more preferably at most 5 wt%, most preferably at most 2 wt% by weight of the total food product. Preferably, a sufficient amount of the inventive concentrated natural tomato-acid extract is at least 0.00001 wt%, preferably at least 0.0001 wt%, more preferably at least 0.001 wt% and preferably at most 30 wt%, more preferably at most 10 wt%, most preferably at most 1 wt% by weight of the acidified food product. Although it is preferred to use the inventive concentrated natural tomato-acid extract instead of adding citric acid or (concentrated) lemon juice (extract), in some cases it may be combined. Especially preferred food products include tomato ketchup, sauces (e.g. tomato, pasta sauce), soups, (salad) dressings, meals, side dishes, cooking aids, beverages, ice cream and concentrates of fruit and vegetable(s). Cooking aids include (concentrated) bouillon products in any format such a granular, pasty, jelly, compressed (e.g. in cubes with or without a semi solid core). Fruit and vegetable concentrates include those concentrates based on vegetables and/or fruits.

Different embodiments of the invention may be carried out in using preferred or more preferred conditions (e.g. level of degrees Brix) or ingredients (e.g. levels of citric acid, glutamic acid). Preferred ranges will often be described in the following format: preferably at least x1, more preferably at least x2, even more preferably at least x3, preferably at most y1, more preferably at most y2, even more preferably at most y3, whereby x1 <x2<x3<y3<y2<y1. This format is meant to include the preferred ranges x1 to y1, more preferably x2 to y2 and even more preferably x3 to y3 whereby the endpoints are included and also all subranges subsumed therein (e.g. x1 to y3 and x3 to y1). The same applies when ranges are described in the format "more than x1" or "less than y1" except that the endpoints are not included. Vice versa, when preferred ranges are described as x1 to y1, more preferably x2 to y2 and even more preferably x3 to y3, the endpoints are meant to be included and also all subranges subsumed therein (e.g. x1 to y3 and x3 to y1). In addition, all open ended ranges are meant to be included: preferably at least x1, more preferably at least x2, even more preferably x3, preferably at most y1, more preferably at most y2, even more preferably at most y3.

Other than in the examples, or where otherwise indicated, all numbers expressing quantities of ingredients or reaction conditions used herein are to be understood as modified in all instances by the term "about". Similarly, all percentages are weight/weight percentages of the total composition unless otherwise indicated.

The invention is further illustrated by the following non-limiting examples. It will be clear to the skilled person how to carry out the invention by using equivalent means without departing from the invention.

### Examples

### Example 1

Tomatoes were washed and pressed through square holes resulting in an aqueous liquid comprising soluble tomato solids and pulp, a (wet) solid mass containing mainly insoluble tomato components called the fibers as well as seeds and skin. Sieves were used to remove seeds and skin and further separation of the fibers is achieved by using a decanter or a centrifugal separator, such as a Westfalia CA-365-010 at a revolution speed of 4000 rpm and/or an Alfa Laval Centrifuge.

The tomato serum was concentrated to 12.5 degrees Brix strength using a Mitchell pilot plant tray dryer with a dry bulb temperature of 65 degrees C. Then the concentrated tomato serum was separated into a first portion and a second portion whereby the first portion is relatively lower in lycopene than the second portion using ultra filtration. The separation was carried out by ultra filtering the tomato serum through an Alfa-Laval polysulphone membrane with 100kDa molecular weight cut-off (GR40PP). The ultra filtration was performed in the plate and frame module of an M20 -Alfa-Laval filtration rig at 50 degrees Celsius with a trans-membrane pressure of 2-3 bars and a recirculation flow rate of 12L/min for the retentate stream. The permeate (first portion from separation step) was substantially free from lycopene.

The permeate obtained after the ultra filtration step was then further concentrated by means of the same Mitchell tray dryer with a dry bulb temperature 65 degrees C until reaching 40 degrees Brix strength. In the following step, the concentrated permeate was fractionated into a first primary fraction and a second primary fraction with a w/w ratio of tomato sugars to citric acid (S/C) higher than the first primary fraction. For this fractionation step, the concentrated permeate was used as a feed in ion exclusion chromatography by passing the feed over a XK 2.6/100 GE healthcare column. The ion exclusion resin used was the DIAION UBK530 in its K+ form. The length of bed filled with the resin was measured to 95cm and the diameter was 26mm. The temperature of the column was kept at 65 degrees C using a thermostat. The injection of feed and execution of the chromatography setup was achieved using an AKTA explorer 100 system from GE healthcare. A 5% Bed Volume (BV) of feed was injected followed by 2BV of elution, where demineralised water was the eluent. The cross flow velocity of the demineralised water was set to 0.95cm/min.

The first 0.3BV of each injection was discarded and the remaining elution of the chromatography was collected at different BV intervals in a refrigerated environment in order to remain suitable for human consumption. At least one first primary tomato fraction and at least one second primary tomato fraction were collected. The fractions were analyzed online for pH, electrical conductivity and refractive index signal. To obtain enough material, a number of injections were made sequentially and the respective fractions were pooled. The collected first primary fraction was then concentrated to 40 degrees Brix using the Mitchell tray dryer as described above.

The concentrated first primary fraction was then used as the feed for a second fractionation step using the same chromatography parameters as for the first fractionation step. The primary fraction was fractionated into at least one first secondary tomato fraction and at least one second secondary tomato fraction.

Sugars and citric acid were determined by HPLC, using Aminex HPX-87H column, 300 x 7.8mm and 5 mM sulphuric acid, pH=2 as eluent, flow rate 0.6 ml/min, at 65 degrees C. Detection was carried out using UV (220 nm) and refractive index detector. This method may slightly overestimate the amount of glucose and fructose as the trace amount of sucrose in the tomato fraction is inverted to glucose and fructose. For the present purpose this is ignored and the values of glucose and fructose have not been corrected. The amino acids were determined by AccQ_Tag HPLC method of Waters Cooperation USA.

A first primary fraction A according to the invention was collected between 0.36 and 0.55 bed volume(BV).

| w/w ratio | A |
|---|---|
| Ratio of citric acid to tomato sugars | >100 |
| Ratio of citric acid/Glutamic acid | 200 |

A first secondary tomato fraction B was collected between 0.36 and 0.52 bed volumes.

| w/w ratio | B |
|---|---|
| Ratio of citric acid/potassium | 4.87 |
| Ratio of citric acid to tomato sugars | 1:0 |
| Ratio of citric acid/Glutamic acid | 1:0 |

### Example 2

Another first secondary tomato fraction was prepared as described in Example 1.

| w/w ratio | |
|---|---|
| Ratio of citric acid/potassium | 6.27 |
| Ratio of citric acid to tomato sugars | 1;0 |
| Ratio of citric acid/Glutamic acid | 1:0 |

### Example 3

Another first secondary tomato fraction was prepared as described in Example 1 (collected between 0.36 and 0.56 bed volumes).

| w/w ratio | |
|---|---|
| Ratio of citric acid/potassium | 3.45 |
| Ratio of citric acid to tomato sugars | 1.01 |
| Ratio of citric acid/Glutamic acid | 3.20 |

### Example 4

Tomato serum was prepared and concentrated to 12.5 degrees Brix according to example 1.
2 Liters of the 12.5 degrees Brix tomato serum was used as feed for a fractionation step using electrodialysis. The feed was placed in the diluate feeding vessel of the electodialysis equipment, with a conductivity of 8.5mS/cm. 1.5 liters of a 5g/L NaCl solution with a conductivity of ca 9.5mS/cm were placed in the concentrate vessel. The recirculation flow of both diluate and concentrate was set to 180L/hr. A Eurodia ED lab scale rig with a EUR2B-10 electodialysis stack was used. The cation exchange membrane used was the NEOSEPTA CMX-5B and the anion exchange membrane used was a NEOSEPTA AXE 01, all manufactured by Tokuyama Corp. A 14volt voltage was applied resulting in gradual reduction of the conductivity from the diluate and increased conductivity of the concentrate where the conductive materials end-up. Samples were taken out at different times to evaluate the w/w ratio of sugars to citric acid and w/w ratio of citric acid to glutamic

### Example 4a of electodialysis performed for 12 minutes

| w/w ratio | Acidifier (concentrate) |
|---|---|
| Ratio of citric acid to tomato sugars | 1.1 |
| Ratio of citric acid/Glutamic acid | 24.5 |

### Example 4b electrodialysis performed for 20 minutes

| w/w ratio | Acidifier (concentrate) |
|---|---|
| Ratio of citric acid to tomato sugars | 4.8 |
| Ratio of citric acid/Glutamic acid | 27.43 |

### Example 5 Concentrated natural tomato-acid extract

Concentrated natural tomato-acid extracts are prepared by concentrating the fractions high in citric obtained according to example 1.

| Wt % (dry basis) | A | B | C |
|---|---|---|---|
| Citric acid | 79.5 | 82.5 | 57.4 |
| Potassium | 15.8 | 12.7 | 15.3 |
| Remaining tomato solids | balance | balance | balance |

### Example 6

Concentrated bouillon product (bouillon cube) acidified with a concentrated natural tomato-acid extract is prepared by mixing the ingredients as listed below.

| Ingredient | Wt% |
|---|---|
| Palm fat | 6.00 |
| Sugar | 14.00 |
| Chicken flavour | 11.00 |
| Yeast extract | 3.00 |
| Colourant | 0.10 |
| concentrated natural tomato-acid extract | 0.42* |
| Onion | 0.70 |
| IMP+GMP | 0.50 |
| MSG | 19.40 |
| Salt | balance |
| | |
| Total | 100.00 |

| | |
|---|---|
| (* amounts to 0.3 wt% of citric acid) | |

### Example 7

A sauce acidified with a concentrated natural tomato-acid extract is prepared by mixing the ingredients as listed below.

| Ingredient | Wt% |
|---|---|
| Tomato pulp and dice | 78.3% |
| Herbs and spices | 1.6% |
| Vegetables | 7.2% |
| concentrated natural tomato-acid extract | 0.1% |
| Salt | 1.4% |
| Sugar | 1.4% |
| Olive oil | 2.0% |
| Water | balance |
| | |
| Total | 100% |

| | |
|---|---|
| (* amounts to 0.07 wt% of citric acid) | |

### Example 8

A tomato ketchup acidified with a concentrated natural tomato-acid extract is prepared by mixing the ingredients as listed below.

| Ingredient | Wt% |
|---|---|
| Tomato puree | 24.0% |
| Vinegar | 9.0% |
| Herbs and spices | 0.2% |
| Thickeners | 0.3% |
| concentrated natural tomato-acid extract | 0.29% |
| Salt | 2.7% |
| Sugar | 20.0% |
| Water | balance |
| Total | 100.0% |

| | |
|---|---|
| (* amounts to 0.2 wt% of citric acid) | |

### Example 9

A tea-based beverage acidified with a concentrated natural tomato-acid extract is prepared by mixing the ingredients as listed below.

| Ingredient | Wt% |
|---|---|
| Flavouring | 0.14% |
| Trisodium citrate | 0.02% |
| Ascorbic acid | 0.02% |
| Sucrose | 5.8% |
| Maltodextrin | 0.5% |
| Concentrated natural tomato-acid extract | 0.22% |
| Black tea extract powder | 014% |
| Water | Balance |
| Total | 100% |

| | |
|---|---|
| (* amounts to 0.16 wt% of citric acid) | |

### Example 10

Creamy vegetable soup (dry) acidified with a concentrated natural tomato-acid extract is prepared by mixing the ingredients as listed below.

| Ingredient | |
|---|---|
| Savoury creamer | 30 wt% |
| Roux | 20 wt% |
| Starch | 17 wt% |
| NaCl | 6 wt% |
| Vegetable particulates | 3.4 wt % vegetable pieces |
| Palm oil (with high amount of unsaturated fatty acids) | 2 wt% |
| Dairy cream | 2 wt% |
| acidified with a concentrated natural tomato-acid extract | 0.07wt% |
| Flavouring ingredients | balance |
| Total | 100 wt% |

| | |
|---|---|
| (* amounts to 0.035 wt% of citric acid) | |

## Claims

1. A process for producing a concentrated natural tomato-acid extract comprising the steps of
a. providing a tomato serum;
b. separating the serum into two or more portions: at least one first portion and at least one second portion whereby the at least one first portion is lower in lycopene than the at least one second portion;
c. concentrating the at least one first portion low in lycopene, preferably to a Brix value of at least 10 degrees Brix;
d. fractionating the at least one first portion low in lycopene into at least one first primary fraction and at least one second primary fraction whereby the w/w ratio of citric acid to tomato sugars (C/S) of the at least one first primary fraction is higher than the at least one second primary fraction, and the at least one first primary fraction has a w/w ratio of citric acid to tomato sugars (C/S) of at least 1 : 0, preferably at least 1: 5, more preferably at least 1: 3, most preferably at least 1:1 and preferably at most 1:0, preferably at most 1000:1, more preferably at most 100: 1, whereby tomato sugars is the combined amount of glucose and fructose;
e. optionally, concentrating a primary fraction to be used as the feed for a second fractionation step;
f. optionally, subjecting a primary fraction to a second fractionation step to prepare at least one first secondary fraction and at least one second secondary fraction whereby the w/w ratio of citric acid to tomato sugars of the at least one first secondary fraction is higher than the at least one second secondary fraction;
g. concentrating the at least one first primary fraction and/or first secondary fraction to provide a concentrated natural tomato-acid extract, said concentrated natural tomato-acid extract having at least 5 wt%, preferably at least 10 wt% more preferably at least 20 wt% and preferably at most 90 wt%, preferably at most 85 wt%, more preferably at most 80 wt% of citric acid by weight of the concentrated natural tomato-acid extract based on dry matter.

2. A process for producing a concentrated natural tomato-acid extract according to claim 1 whereby the concentrated natural tomato-acid extract comprises phenolic compounds and potassium.

3. A process according to any one of the preceding claims whereby the concentrated natural tomato-acid extract further comprises a w/w ratio of citric acid to potassium of at least 1.2 : 1, preferably at least 1.5 : 1, more preferably at least 2 : 1, preferably at most 300:1, more preferably at most 250 : 1, more preferably at most 100 : 1.

4. A process according to any one of the preceding claims whereby the concentrated natural tomato-acid extract further comprises a w/w ratio of citric acid to glutamic acid of at least 1 : 1, preferably at least 2 : 1, more preferably at least 3 : 1, preferably at most 1:0, more preferably at most 1000, 0.01, more preferably at most 1000: 1.

5. A process according to any one of the preceding claims whereby the concentrated natural tomato-acid extract comprises at most 1000 ppm, preferably at most 500 ppm, preferably at most 300 pm, preferably at most 150 ppm, preferably at most 50 ppm, preferably at least 0 ppm, preferably 0 ppm of lycopene (dry basis).

6. A concentrated natural tomato-acid extract obtainable according to a process of any one of the preceding claims whereby the concentrated natural tomato-acid extract comprises a w/w ratio of citric acid to tomato sugars of at least 1: 10 comprising at least 5 wt% citric acid by weight of the total concentrated natural tomato-acid extract (dry basis).

7. A process to acidify a food product comprising the steps of
a. providing a food product to be acidified
b. adding a concentrated natural tomato-acid extract obtainable according to any one of the preceding claims to said food product.

8. A process according to claim 7 whereby the amount of natural tomato acidifier fraction is added such that the amount of citric acid in the acidified food product is at least 0.001 wt%, preferably at least 0.01 wt%, preferably at least 0.05 wt%, preferably at most 10 wt%, more preferably at most 5 wt% most preferably at most 2 wt% by weight of the total food product.

9. A process according to claim 7 or 8 whereby the food product is selected from the group comprising of ketchup, tomato ketchup, sauce, soup, (salad) dressing, meal, side dish, cooking aid, beverage, ice cream and concentrate of fruit and vegetable(s).

## Patentansprüche

1. Ein Verfahren zur Herstellung eines konzentrierten natürlichen Tomatensäureextrakts, umfassend die Schritte
a. Vorlegen eines Tomatenserums;
b. Trennen des Serums in zwei oder mehr Anteile: mindestens einen ersten Anteil und mindestens einen zweiten Anteil, wobei der mindestens eine erste Anteil weniger Lycopin enthält als der mindestens zweite Anteil;
c. Konzentrieren des mindestens einen ersten Anteils, der einen geringen Lycopinanteil aufweist, vorzugsweise auf einen Brixwert von mindestens 10 °Brix;
d. Fraktionieren des mindestens einen ersten Anteils mit geringem Lycopinanteil in mindestens eine erste Primärfraktion und mindestens eine zweite Primärfraktion, wobei das Gewicht/Gewicht-Verhältnis von Zitronensäure zu Tomatenzuckern (C/S) der mindestens einen ersten Primärfraktion höher ist als das der mindestens einen zweiten Primärfraktion, und die mindestens eine erste Primärfraktion ein Gewicht/Gewicht-Verhältnis von Zitronensäure zu Tomatenzuckern (C/S) von mindestens 1:10, vorzugsweise mindestens 1:5, weiter bevorzugt mindestens 1:3, meist bevorzugt mindestens 1:1 und vorzugsweise höchstens 1:0, vorzugsweise höchstens 1000:1, weiter vorzugsweise höchstens 100:1 aufweist, wobei die Tomatenzucker die kombinierte Menge von Glucose und Fructose darstellen;
e. gegebenenfalls Konzentrieren einer Primärfraktion zur Verwendung für das Zuführen zu einem zweiten Fraktionierungsschritt;
f. gegebenenfalls Einbeziehen einer Primärfraktion in einen zweiten Fraktionierungsschritt, um mindestens eine erste Sekundärfraktion und mindestens eine zweite Sekundärfraktion herzustellen, wobei das Gewicht/Gewicht-Verhältnis von Zitronensäure zu Tomatenzuckern der mindestens einen ersten Sekundärfraktion höher ist als das der mindestens einen zweiten Sekundärfraktion;
g. Konzentrieren der mindestens einen ersten Primärfraktion und/oder der ersten Sekundärfraktion, um einen konzentrierten natürlichen Tomatensäureextrakt zu bilden, wobei der konzentrierte natürliche Tomatensäureextrakt mindestens 5 Gewichts-%, vorzugsweise mindestens 10 Gewichts-%, weiter bevorzugt mindestens 20 Gewichts-% und bevorzugt höchstens 90 Gewichts-%, vorzugsweise höchstens 85 Gewichts-%, weiter bevorzugt höchstens 80 Gewichts-% Zitronensäure, bezogen auf das Gewicht des konzentrierten natürlichen Tomatensäureextrakts, basierend auf der Trockenmasse, aufweist.

2. Ein Verfahren zur Herstellung eines konzentrierten natürlichen Tomatensäureextrakts gemäß Anspruch 1, wobei der konzentrierte natürliche Tomatensäureextrakt phenolische Verbindungen und Kalium enthält.

3. Ein Verfahren gemäß irgendeinem der vorstehenden Ansprüche, wobei der konzentrierte natürliche Tomatensäureextrakt weiterhin ein Gewicht/Gewicht-Verhältnis von Zitronensäure zu Kalium von mindestens 1,2:1, vorzugsweise mindestens 1,5:1, weiter bevorzugt mindestens 2:1, bevorzugt höchstens 300:1, weiter bevorzugt höchstens 250:1 und weiter bevorzugt höchstens 100:1 aufweist.

4. Ein Verfahren gemäß irgendeinem der vorstehenden Ansprüche, wobei der konzentrierte natürliche Tomatensäureextrakt weiterhin ein Gewicht/Gewicht-Verhältnis von Zitronensäure zu Glutaminsäure von mindestens 1:1, vorzugsweise mindestens 2:1, weiter bevorzugt mindestens 3:1, vorzugsweise höchstens 1:0, weiter bevorzugt höchstens 1000:0,01, weiter bevorzugt höchstens 1000:1 aufweist.

5. Ein Verfahren gemäß irgendeinem der vorstehenden Ansprüche, wobei der konzentrierte natürliche Tomatensäureextrakt höchstens 1000 ppm, vorzugsweise höchstens 500 ppm, vorzugsweise höchstens 300 ppm, vorzugsweise höchstens 150 ppm, vorzugsweise mindestens 0 ppm, vorzugsweise 0 ppm Lycopin (Trockenbasis) aufweist.

6. Ein konzentrierter natürlicher Tomatensäureextrakt, erhältlich mit Hilfe eines Verfahrens gemäß irgendeinem der vorstehenden Ansprüche, wobei der konzentrierte natürliche Tomatensäureextrakt ein Gewicht/Gewicht-Verhältnis von Zitronensäure zu Tomatenzuckern von mindestens 1:10 aufweist und mindestens 5 Gewichts-% Zitronensäure, bezogen auf das Gewicht des gesamten konzentrierten natürlichen Tomatensäureextrakts (Trockenbasis), enthält.

7. Verfahren zur Ansäuerung von Nahrungsmittelprodukten, umfassend die Schritte
a. Vorlegen eines Nahrungsmittelprodukts, das angesäuert werden soll,
b. Zugabe von konzentriertem natürlichem Tomatensäureextrakt, erhältlich nach irgendeinem der vorstehenden Ansprüche zu dem Nahrungsmittelprodukt.

8. Verfahren nach Anspruch 7, wobei die natürliche Tomatensäuerungsmittel-Fraktion in einer Menge zugegeben wird, dass die Menge von Zitronensäure im angesäuerten Nahrungsmittelprodukt mindestens 0,001 Gewichts-%, bevorzugt mindestens 0,01 Gewichts-%, bevorzugt mindestens 0,05 Gewichts-%, bevorzugt höchstens 10 Gewichts-%, weiter bevorzugt höchstens 5 Gewichts-%, meist bevorzugt höchstens 2 Gewichts-%, bezogen auf das Gewicht des gesamten Nahrungsmittelprodukts, beträgt.

9. Verfahren gemäß Anspruch 7 oder 8, wobei das Nahrungsmittelprodukt ausgewählt ist aus der Gruppe umfassend Ketchup, Tomatenketchup, Soße, Suppe, (Salat)Dressing, Mahlzeit, Beilage, Kochhilfsmittel, Getränk, Eiscreme und Konzentrat von Früchten und Gemüse(n).

## Revendications

1. Procédé de production d'un extrait acide de tomate naturel concentré comprenant les étapes de
a. fourniture d'un sérum de tomate ;
b. séparation du sérum en deux ou plusieurs portions : au moins une première portion et au moins une seconde portion, selon laquelle la au moins une première portion est inférieure en lycopène à la au moins une seconde portion ;
c. concentration de la au moins une première portion faible en lycopène, de préférence à une valeur Brix d'au moins 10 degrés Brix ;
d. fractionnement de la au moins une première portion faible en lycopène en au moins une première fraction primaire et au moins une seconde fraction primaire selon lequel le rapport masse/masse d'acide citrique aux sucres de tomate (C/S) de la au moins une première fraction primaire est supérieure à la au moins une seconde fraction primaire, et la au moins une première fraction primaire présente un rapport masse/masse d'acide citrique aux sucres de tomate (C/S) d'au moins 1:10, de préférence d'au moins 1:5, encore mieux d'au moins 1:3, bien mieux encore d'au moins 1:1 et de préférence d'au plus 1:0, de préférence d'au plus 1 000:1, encore mieux d'au plus 100:1, selon lequel les sucres de tomate constituent la quantité combinée de glucose et de fructose ;
e. éventuellement, concentration d'une fraction primaire à utiliser comme l'alimentation pour une seconde étape de fractionnement ;
f. éventuellement, soumission d'une première fraction à une seconde étape de fractionnement pour préparer au moins une première fraction secondaire et au moins une seconde fraction secondaire selon laquelle le rapport masse/masse d'acide citrique aux sucres de tomate de la au moins une première fraction secondaire est supérieur à la au moins une seconde fraction secondaire ;
g. concentration de la au moins une première fraction primaire et/ou première fraction secondaire pour fournir un extrait acide de tomate naturel concentré, ledit extrait acide de tomate naturel concentré présentant au moins 5 % en masse, de préférence au moins 10 % en masse, encore mieux au moins 20 % en masse et de préférence au plus 90 % en masse, de préférence au plus 85 % en masse, encore mieux au plus 80 % en masse d'acide citrique en masse de l'extrait acide de tomate naturel concentré sur la base de matière sèche.

2. Procédé de production d'un extrait acide de tomate naturel concentré selon la revendication 1, selon lequel l'extrait acide de tomate naturel concentré comprend des composés phénoliques et du potassium.

3. Procédé selon l'une quelconque des revendications précédentes, selon lequel l'extrait acide de tomate naturel concentré comprend de plus un rapport masse/masse d'acide citrique au potassium d'au moins 1,2:1, de préférence d'au moins 1,5:1, encore mieux d'au moins 2:1, de préférence d'au plus 300:1, encore mieux d'au plus 250:1, bien mieux encore d'au plus 100:1.

4. Procédé selon l'une quelconque des revendications précédentes, selon lequel l'extrait acide de tomate naturel concentré comprend de plus un rapport masse/masse d'acide citrique à acide glutamique d'au moins 1:1, de préférence d'au moins 2:1, encore mieux d'au moins 3:1, de préférence d'au plus 1:0, encore mieux d'au plus 1 000:0,01, bien mieux encore d'au plus 1 000:1.

5. Procédé selon l'une quelconque des revendications précédentes, selon lequel l'extrait acide de tomate naturel concentré comprend au plus 1 000 ppm, de préférence au plus 500 ppm, de préférence au plus 300 ppm, de préférence au plus 150 ppm, de préférence au plus 50 ppm, de préférence au moins 0 ppm, de préférence 0 ppm de lycopène (base sèche).

6. Extrait acide de tomate naturel concentré pouvant être obtenu selon un procédé selon l'une quelconque des revendications précédentes, selon lequel l'extrait acide de tomate naturel concentré comprend un rapport masse/masse d'acide citrique aux sucres de tomate d'au moins 1:10 comprenant au moins 5 % en masse d'acide citrique en masse de l'extrait acide de tomate naturel concentré total (base sèche).

7. Procédé pour acidifier un produit alimentaire comprenant les étapes de
a. fourniture d'un produit alimentaire à acidifier ;
b. addition d'un extrait acide de tomate naturel concentré pouvant être obtenu selon l'une quelconque des revendications précédentes audit produit alimentaire.

8. Procédé selon la revendication 7, selon lequel la quantité de fraction d'acidifiant de tomate naturel est ajoutée de sorte que la quantité d'acide citrique dans le produit alimentaire acidifié est d'au moins 0,001 % en masse, de préférence d'au moins 0,01 % en masse, de préférence d'au moins 0,05 % en masse, de préférence d'au plus 10 % en masse, encore mieux d'au plus 5 % en masse, bien mieux encore d'au plus 2 % en masse du produit alimentaire total.

9. Procédé selon la revendication 7 ou 8, selon lequel le produit alimentaire est choisi dans le groupe comprenant du ketchup, du ketchup de tomate, une sauce, une soupe, un assaisonnement (salade), un plat, un accompagnement, une aide à la cuisson, une boisson, une crème glacée et un concentré de fruit et de légume(s)
